# EUROPÄISCHE PATENTSCHRIFT

(11) **EP 0 533 698 B1**
(45) Veröffentlichungstag und Bekanntmachung des Hinweises auf die Patenterteilung: **23.03.1994**
(21) Anmeldenummer: 91909975.4
(22) Anmeldetag: 04.06.1991
(51) Int. Cl.: B60N 2/28, B60R 21/08

(54) **KINDER-SICHERHEITSSITZ**
CHILD'S SAFETY SEAT
SIEGE DE SECURITE POUR ENFANTS

(30) Priorität: 09.06.1990 DE 4018510
(43) Veröffentlichungstag der Anmeldung: 31.03.1993
(73) Patentinhaber: AUTOLIV DEVELOPMENT AB, S-44783 Vargarda (SE)
(72) Erfinder: SEDLMAYR, Gerhard, D-2000 Hamburg 52 (DE)
(74) Vertreter: Müller, Karl-Ernst, Dr., Dipl.-Ing.
(86) Internationale Anmeldenummer: DE9100476
(87) Internationale Veröffentlichungsnummer: WO9119623

(56) Entgegenhaltungen:
- DE-A- 3 800 896
- GB-A- 1 462 125
- US-A- 3 713 695
- US-A- 3 837 670
- US-A- 4 540 219

## Beschreibung

Die Erfindung betrifft einen Kinder-Sicherheitssitz, der mittels eines Sicherheitsgurtsystems im Kraftfahrzeug zu haltern ist, mit einer Sitzschale und mit einem im Unfallgeschehen den Oberkörper des Kindes einhausenden Auffangkörper, der das Kind und insbesondere dessen Kopf in der Sitzschale hält.

Ein gattungsgemäßer Kindersitz ist aus der US-A-3 713 695 bekannt; dieser Kinder-Sicherheitssitz besteht aus einer Sitzschale und aus einem vor dem Körper des in der Sitzschale sitzenden Kindes liegenden Bügel, der bei im Unfallgeschehen auftretenden Verzögerungen das Kind in der Sitzschale zurückhält. Da dieser Bügel im wesentlichen auf den mittleren Körperteil wirkt, ist zur Sicherung des Oberkörpers und insbesondere des Kopfes des Kindes eine den Oberkörper des Kindes einhausende und zwischen dem Bügel und dem Kopfteil der Sitzschale aufgespannte Plane angeordnet, die vorzugsweise aus einem durchsichtigen Material bestehen soll.

Mit dem bekannten Kindersitz ist der Nachteil verbunden, daß die an dem Kindersitz befindlichen Schutzanordnungen ständig eingerichtet sein müssen und somit das Kind sehr einengend und für dieses störend wirken; da insbesondere die den Oberkörper des Kindes einhausende Plane ständig aufgespannt ist, wird das Kind nicht nur in seinem Bewegungsspielraum stark eingeengt, sondern hat auch die Plane ständig vor dem Gesicht, so daß der von Kindern gesuchte Kontakt zu mitfahrenden Personen erschwert beziehungsweise unmöglich ist. Hinzu kommt, daß das Hineinsetzen des Kindes in den Kindersitz und dessen anschließende Sicherung mit Vorlegen des Bügels und Montage der Plane umständlich und aufwendig ist.

Der Erfindung liegt daher die Aufgabe zugrunde, einen Kinder-Sicherheitssitz mit den eingangs genannten Merkmalen derart zu verbessern, daß bei weiterhin gegebener Sicherung des Oberkörpers und insbesondere des Kopfes des Kindes gegen die im Unfallgeschehen auftretenden Beschleunigungen beziehungsweise Verzögerungen der Kindersitz besser handhabbar und die Bewegungsfreiheit des in dem Sitz sitzenden Kindes nicht eingeschränkt ist.

Die Lösung dieser Aufgabe ergibt sich aus dem Inhalt des nachstehenden Anspruchs 1. Vorteilhafte Ausgestaltungen und Weiterbildungen davon ergeben sich aus dem Inhalt der nachstehenden abhängigen Patentansprüche.

Die Erfindung sieht vor, daß der Auffangkörper als mit einem Ende an feststehenden Armen und mit seinem anderen Ende an an der Sitzschale beweglich angeordneten Armen befestigter Balg aus einem elastischen Material ausgebildet ist, der in Normalstellung zusammengeschoben über dem Kopfteil der Sitzschale steht und im Auslösefall durch die Drehbewegung der Arme jalousieartig entfaltet wird. Hieraus ergibt sich insbesondere der Vorteil, daß der das Kind sichernde Auffangkörper an der Sitzschale in integrierter und in Normalstellung die Bewegungsfreiheit des in der Sitzschale sitzenden Kindes nicht einengender Ausbildung angeordnet und nur im Unfallgeschehen über einen sensorgesteuerten Auslösemechanismus in seine das Kind sichernde Lage bringbar ist. Hieraus ergibt sich der Vorteil, daß der Kindersitz als solcher unabhängig von dem in dem Sitz sitzenden Kind mittels des kraftfahrzeugseitigen Sicherheitsgurtssystems festlegbar ist, wobei das Kind bei normalem Gebrauch ohne einengende Auffang- oder Gurtteile sich in dem Kindersitz frei bewegen kann. Erst aufgrund einer im Unfallgeschehen vorgenommenen Auslösung wird durch Entfaltung des Auffangkörpers die Rückhaltefunktion des Kinder-Sicherheitssitzes verwirklicht. Dabei wird insbesondere im Unfallgeschehen auch der Oberkörper beziehungsweise der Kopf des Kindes durch den den Oberkörper des Kindes einhausenden Auffangkörper abgefangen.

Der jalousieartige Auffangkörper reicht in der Endlage so tief auf den Sitzteil der Sitzschale herunter, daß ein Durchrutschen des Kindes unter den Bügel bzw. den Auffangkörper ausgeschlossen ist.

Als Antrieb für diese Schwenkbewegung des Bügels oder des Auffangkörpers kommen nach Ausführungsbeispielen der Erfindung vorgespannte Dreh- oder Zugfedern oder auch eine pyrotechnisch oder durch Kaltgas-Druckflaschen betätigte Antriebsvorrichtung in Frage.

Zusätzlich zu den vorbeschriebenen Maßnahmen sind an dem Kindersitz zweckmäßig Körperrückholeinrichtungen angeordnet, die zeitlich vor der Auslösung des Auffangkörpers aktivierbar sind. Damit soll vermieden werden, daß der Kopf des Kindes durch die Entfaltung des Auffangkörpers verletzt wird, wenn das Kind sich mit seinem Kopf im Wirkungsbereich des Auffangkörpers, befindet. Entsprechende Körperrückholvorrichtungen, beispielsweise in Form von mit einer Strammvorrichtung strammbaren und an der Kindersitzschale angeordneten Sicherheitsgurten bringen das Kind damit vor Aktivierung des Auffangkörpers in eine Lage, in welcher der Auffangkörper sich bewegen kann, ohne den zu schützenden Kopf des Kindes zu erfassen.

Weiterhin kann es zweckmäßig sein, zusätzlich zu dem Auffangkörper noch eine Sicherung für die Beine des Kindes vorzusehen, um ein Hinausrutschen aus dem Sitz zu vermeiden; eine derartige Sicherung kann aus einem die Beine des Kindes übergreifenden Bügel oder Tisch bestehen, wie er sich aus der DE-A-3 517 841 (A1) grundsätzlich ergibt.

In der Zeichnung sind Ausführungsbeispiele der Erfindung wiedergegeben, welche nachstehend beschrieben sind.

Es zeigen:
- Fig. 1: einen Kinder-Sicherheitssitz in schaubildlicher Darstellung mit einem entfaltbaren Auffangkörper als Prallkörper in Normalstellung,
- Fig. 2: den Gegenstand der Figur 1 in Sicherungsstellung,
- Fig. 3: die Anordnung einer Drehfeder als Antrieb für den Auffangkörper,
- Fig. 4: die Anordnung einer Zugfeder als Antrieb für den Auffangkörper,
- Fig. 5: die Anordnung einer pyrotechnischen Antriebsvorrichtung für den Auffangkörper.

Eine Sitzschale 10 eines Kinder-Sicherheitssitzes weist Seitenwangen 25, ein Rückenteil 24, sowie einen oberen Kopfteil 26 auf. Die Sitzschale 10 ist in einer nicht weiter dargestellten Weise mit einem kraftfahrzeugseitigen Sicherheitsgurtsystem im Kraftfahrzeug so zu haltern, daß die Sitzschale in ihrem vorderen Bereich von dem Sicherheitsgurt nicht übergriffen wird.

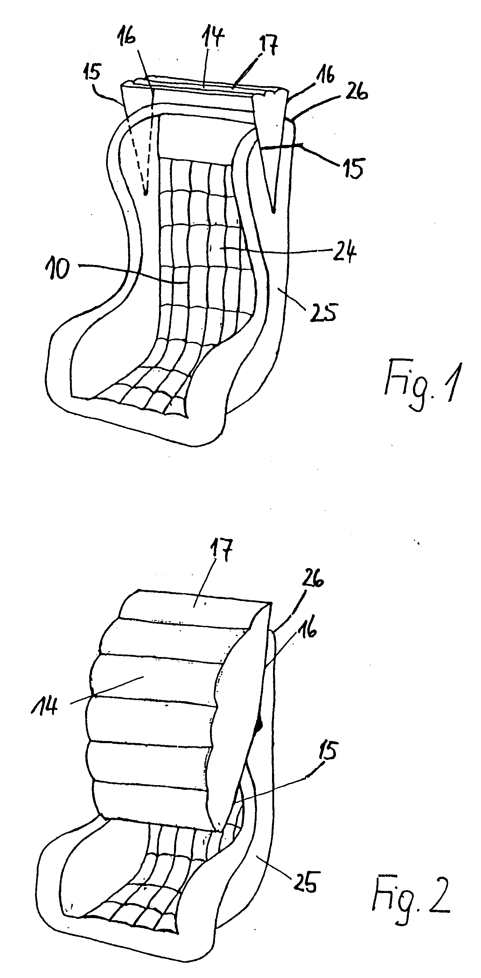

Bei dem aus den Figuren 1 und 2 ersichtlichen Kindersitz ist ein jalousieartig sich entfaltender Auffangkörper 14 vorgesehen, dessen aus einem elastischen Material bestehender Balg zwischen einem feststehenden Arm 16 und einem beweglichen Arm 15 entfaltbar ist. In der aus Figur 3 ersichtlichen Normalstellung ist der Auffangkörper 14 mit zusammengeschobenem Balg 17 über dem Kopfteil 26 der Sitzschale 10 angeordnet. Im Auslösefall schwenken die beweglich gelagerten Arme 15 parallel zu den Seitenwangen 25 der Sitzschale 10 nach vorne und entfalten dabei den Balg 17, der mittels der feststehenden Arme 16 mit einem Ende festgelegt ist. Auf diese Weise ergibt sich ein das Kind einhausender Auffangkörper, der insbesondere auch der Schutzfunktion für den Kopf des Kindes gerecht wird.

In den Figuren 3 bis 5 sind zweckmäßige Antriebe für die Bewirkung der Drehbewegung des Auffangkörpers 14 dargestellt. Die drehbaren Arme 15 des Auffangkörpers 14 sind an einer am Rückenteil 24 der Sitzschale 10 angeordneten Drehachse 19 in Lagern 18 gelagert, wobei die Drehachse 19 bei dem in Figur 3 gezeigten Ausführungsbeispiel als eine vorgespannte Drehfeder 20 ausgebildet ist. In diesem Fall ist eines der beiden Lager 18 als Festlager ausgebildet. Die hierfür erforderliche und sensorgesteuerte Entriegelungsvorrichtung für die Drehfeder ist im einzelnen nicht dargestellt.

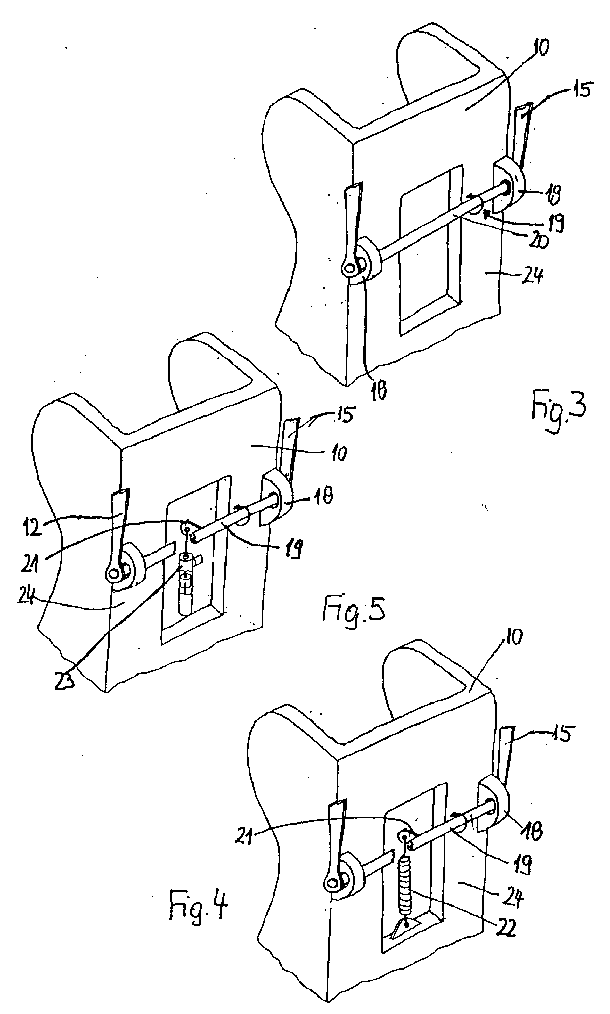

Aus Figur 4 ergibt sich eine alternative Ausführungsform, bei welcher an der Drehachse 19 ein Exzenteransatz 21 vorgesehen ist, an dem eine vorgespannte und sich an dem Rückenteil 24 der Sitzschale 10 abstützende Zugfeder 22 angreift, so daß bei Entspannung der Zugfeder eine Drehbewegung der Drehachse 19 erfolgt.

Eine weitere Ausführungsform gemäß Figur 5 sieht vor, die Zugfeder durch eine pyrotechnische Kolben-Zylinder-Einheit 23 zu ersetzen, die ebenfalls an dem Ansatz 21 der Drehachse 19 angreift und im Auslösefall die Drehbewegung der Drehachse 19 herbeiführt.

## Patentansprüche

1. Kinder-Sicherheitssitz, der mittels eines Sicherheitsgurtsystems im Kraftfahrzeug zu haltern ist, mit einer Sitzschale (10) und mit einem im Unfallgeschehen den Oberkörper des Kindes einhausenden Auffangkörper (14), der das Kind und insbesondere dessen Kopf in der Sitzschale (10) hält, dadurch gekennzeichnet, daß der Auffangkörper (14) als mit einem Ende an feststehenden Armen (16) und mit seinem anderen Ende an an der Sitzschale (10) beweglich angeordneten Armen (15) befestigter Balg (17) aus einem elastischen Material ausgebildet ist, der in der Normalstellung zusammengeschoben über den Kopfteil (26) der Sitzschale (10) steht und im Auslösefall durch die Drehbewegung der Arme (15) jalousieartig entfaltet wird.

2. Kinder-Sicherheitssitz nach Anspruch 1, dadurch gekennzeichnet, daß die beweglichen Arme (15) mittels einer außen am Rückenteil (24) der Sitzschale (10) gelagerten und im Auslösefall in eine Drehung zu versetzenden Drehachse (19) von der Normalstellung in die Sicherungsstellung drehbar sind.

3. Kinder-Sicherheitssitz nach Anspruch 2, dadurch gekennzeichnet, daß die Drehachse (19) als eine gegen ein Festlager vorgespannte und im Auslösefall entriegelbare Drehfeder (20) ausgebildet ist.

4. Kinder-Sicherheitssitz nach Anspruch 2, dadurch gekennzeichnet, daß der Antrieb der Drehachse (19) über eine an einem Exzenteransatz (21) der Drehachse (19) angreifende und im Auslösefall entriegelbare vorgespannte Zugfeder (22) erfolgt.

5. Kinder-Sicherheitssitz nach Anspruch 2, dadurch gekennzeichnet, daß der Antrieb der Drehachse (19) aus einer im Auslösefall aktivierbaren und an einem exzentrischen Ansatz (21) der Drehachse (19) angreifenden pyrotechnischen Einheit (23) besteht.

6. Kinder-Sicherheitssitz nach einem der Ansprüche 1 bis 5, dadurch gekennzeichnet, daß an dem Kindersitz (10) Körperrückholeinrichtungen angeordnet sind, die zeitlich vor der Auslösung des Auffangkörpers (14) aktivierbar sind.

7. Kinder-Sicherheitssitz nach einem der Ansprüche 1 bis 6, dadurch gekennzeichnet, daß an der Sitzschale (10) zusätzlich zu dem Auffangkörper (14) ein die Beine des Kindes übergreifender und sichernder Bügel oder Tisch angeordnet ist.

## Claims

1. Child's safety seat which is to be supported in the motor vehicle by means of a safety-belt system, having a seat bowl (10) and having a catch body (14) housing the upper body of the child in the event of an accident, which catch body holds the child and in particular its head in the seat bowl (10), characterized in that the catch body (14) is constructed as bellows (17) of an elastic material fastened with one end to stationary arms (16) and with the other end to arms (15) movably arranged on the seat bowl (10), the bellows being pushed together in the normal position over the head part (26) of the seat bowl (10) and in the case of release being unfolded like shutters by way of the rotary movement of the arms (15).

2. Child's safety seat according to claim 1, characterized in that the moving arms (15) can be rotated from the normal position into the security position by means of a rotary axis (19) mounted on the outside on the rear part (24) of the seat bowl (10) and to be set rotating in the case of release.

3. Child's safety seat according to claim 2, characterized in that the rotary axis (19) is constructed as a rotary spring (20) prestressed against a fixed bearing and capable of being unlocked in the case of release.

4. Child's safety seat according to claim 2, characterized in that the drive of the rotary axis (19) takes place by way of a prestressed tension spring (22) engaging on an eccentric attachment (21) of the rotary axis (19) and capable of being unlocked in the case of release.

5. Child's safety seat according to claim 2, characterized in that the drive of the rotary axis (19) consists of a pyrotechnical unit (23) which can be activated in the case of release and which engages on an eccentric attachment (21) of the rotary axis (19).

6. Child's safety seat according to one of claims 1 to 5, characterized in that body-return devices are arranged on the child's seat (10), which devices can be temporally activated before the release of the catch body (14).

7. Child's safety seat according to one of claims 1 to 6, characterized in that in addition to the catch body (14), a strap or table engaging over and securing the child's legs is arranged on the seat bowl (10).

## Revendications

1. Siège de sécurité pour enfant, à fixer dans le véhicule automobile au moyen d'un système de ceinture de sécurité, avec une coque de siège (10) et avec un corps de retenue (14) venant recevoir le haut du corps de l'enfant en cas d'accident et maintenant l'enfant et, en particulier, sa tête, dans la coque de siège (10), caractérisé en ce que le corps de retenue (14) est réalisé sous forme de soufflet (17) en matériau élastique, fixé, par une extrémité, à des bras fixes (16) et, par son autre extrémité, sur des bras (15) mobiles sur la coque de siège (10), le soufflet (17) étant rétracté sur la partie tête (26) de la coque de siège (10) lorsqu'il est dans la position normale et déployé comme une jalousie, en cas d'accident, par le mouvement de rotation des bras (15).

2. Siège de sécurité pour enfant, selon la Revendication 1.- caractérisé en ce que les bras mobiles (15) sont susceptibles de tourner, de la position normale à la position de sécurité, au moyen d'un axe de rotation (19), tourillonnant extérieurement sur la partie dos (24) de la coque de siège (10), et effectuant un mouvement de rotation en cas de déclenchement.

3. Siège de sécurité pour enfant, selon la Revendication 2.- caractérisé en ce que l'axe de rotation (19) est réalisé sous forme d'un ressort de torsion (20) précontraint à l'encontre d'une butée fixe et susceptible d'être déverrouillé en cas d'accident.

4. Siège de sécurité pour enfant selon la Revendication 2.- caractérisé en ce que l'entrainement de l'axe de rotation (19) s'effectue par l'intermédiaire d'un ressort de traction (22) précontraint, agissant sur un appendice excentrique (21) de l'axe de rotation (19) et susceptible d'être déverrouillé en cas de déclenchement.

5. Siège de sécurité pour enfant selon la Revendication 2.- caractérisé en ce que l'entrainement de l'axe de rotation (19) est composé d'un ensemble pyrotechnique, pouvant être activé en cas de déclenchement et agissant sur un appendice excentrique (21) de l'axe de rotation (19).

6. Siège de sécurité pour enfant selon l'une des Revendications 1 à 5, caractérisé en ce que des dispositifs de rappel du corps, pouvant être activés temporellement avant 1e déclenchement du corps de retenue (14), sont disposés sur le siège d'enfant (10).

7. Siège de sécurité pour enfant selon l'une des Revendications 1 à 6, caractérisé en ce qu'un étrier ou panneau, saisissant les jambes de l'enfant et les mettant en sécurité, est disposé sur la coque de siège (10), en plus du corps de retenue (14).
